(19) Europäisches Patentamt / European Patent Office / Office européen des brevets

(11) **EP 3 828 729 A2**

(12) **EUROPEAN PATENT APPLICATION**

(43) Date of publication:
02.06.2021 Bulletin 2021/22

(51) Int Cl.:
**G06F 16/29** (2019.01)

(21) Application number: **21163441.5**

(22) Date of filing: **18.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **28.08.2020 CN 202010884513**

(71) Applicant: **Beijing Baidu Netcom Science and Technology Co., Ltd. Beijing 100085 (CN)**

(72) Inventor: **DONG, Jian Beijing, 100085 (CN)**

(74) Representative: **Jordan, Volker Otto Wilhelm Weickmann & Weickmann Patent- und Rechtsanwälte PartmbB Postfach 860 820 81635 München (DE)**

(54) **MAP COORDINATE PROCESSING METHOD, MAP COORDINATE PROCESSING DEVICE, ELECTRONIC DEVICE, AND STORAGE MEDIUM**

(57) A map coordinate processing method, a map coordinate processing device, an electronic device, and a storage medium are provided. The map coordinate processing method includes: acquiring a geographic coordinate of a target location; determining a map coordinate of the target location according to relative location relationship between the geographic coordinate of the target location and a pre-generated buffer-area boundary; wherein the buffer-area boundary surrounds a first region, the first region is a region where transformation from a geographic coordinate into a map coordinate is performed by using a first coordinate transformation, a region outside the buffer-area boundary is a region where transformation from a geographic coordinate into a map coordinate is performed by using a second coordinate transformation.

101

Acquiring a geographic coordinate of a target location

102

Determining a map coordinate of the target location according to relative location relationship between the geographic coordinate of the target location and a pre-generated buffer-area boundary; wherein the buffer-area boundary surrounds a first region, the first region is a region where transformation from a geographic coordinate into a map coordinate is performed by using a first coordinate transformation, a region outside the buffer-area boundary is a region where transformation from a geographic coordinate into a map coordinate is performed by using a second coordinate transformation

**Fig.1**

## Description

## TECHNICAL FIELD

This application relates to the field of map technologies, and specifically, relates to a map coordinate processing method, a map coordinate processing device, an electronic device, and a storage medium.

## BACKGROUND

Coordinate systems are a benchmark reference for representation of map data. In current maps, coordinate transformation manners for different regions may be different. For example, data of coordinates of some regions may need to be encrypted. Encryption will cause the coordinates to shift and deviate from real coordinates. Data of coordinates of some regions may not require to be encrypted. Due to different coordinate transformation manners for different regions, a problem of sharp changes of coordinates or overlapping of coordinates is likely to occur at boundaries of different regions in the map.

SUMMARY

The present application provides a map coordinate processing method, a map coordinate processing device, an electronic device, and a storage medium.

According to a first aspect, the present application provides a map coordinate processing method. The method includes:

acquiring a geographic coordinate of a target location;
determining a map coordinate of the target location according to relative location relationship between the geographic coordinate of the target location and a pre-generated buffer-area boundary; wherein the buffer-area boundary surrounds a first region, the first region is a region where transformation from the geographic coordinate into the map coordinate is performed by using a first coordinate transformation, a region outside the buffer-area boundary is a region where transformation from the geographic coordinate into the map coordinate is performed by using a second coordinate transformation.

According to a second aspect, the present application provides a map coordinate processing device. The device includes:

an acquisition module, configured to acquire a geographic coordinate of a target location;
a determination module, configured to determine a map coordinate of the target location according to relative location relationship between the geographic coordinate of the target location and a pre-generated buffer-area boundary; wherein the buffer-area boundary surrounds a first region, the first region is a region where transformation from the geographic coordinate into the map coordinate is performed by using a first coordinate transformation, a region outside the buffer-area boundary is a region where transformation from the geographic coordinate into the map coordinate is performed by using a second coordinate transformation.

According to a third aspect, the present application provides an electronic device, and the device includes:

at least one processor; and
a storage communicatively connected to the at least one processor,
wherein the storage stores therein an instruction configured to be executable by the at least one processor, and the at least one processor is configured to execute the instruction to implement any method in the first aspect.

According to a fourth aspect, a non-transitory computer-readable storage medium storing therein computer instructions is provided, where the computer instructions are used for causing a computer to implement any method in the first aspect.

According to technical solutions of the present application, in a case that the coordinate transformation manner for a certain region is different from that for other regions, a buffer-area boundary surrounding the region may be generated. After a geographic coordinate of a certain location is acquired, the map coordinate of the location may be determined based on the relative location relationship between the geographic coordinate of the location and the buffer-area boundary, so that a coordinate offset caused by different coordinate transformation manners for map coordinates near the buffer-area boundary is gradually eliminated, the problem of sharp changes of coordinates or overlapping of coordinates at boundaries among different regions in the map due to different coordinate transformation manners for different regions may be solved.

It is understood, this summary is not intended to identify key features or essential features of the embodiments of the present application, nor is it intended to be used to limit the scope of the present application. Other features of the present application will become more comprehensible with reference to the following description.

## BRIEF DESCRIPTION OF THE DRAWINGS

The drawings are used to better understand the solutions of the present application and constitute no limitation to the present application.

Fig.1 is a schematic flowchart of a map coordinate processing method according to a first embodiment of the present application;

Fig.2 is a schematic diagram of a buffer of a first region and an MBR according to a first embodiment of the present application;

Fig.3 is an enlarged schematic diagram corresponding to a dashed box in Fig. 2;

Fig.4 is a structural schematic diagram of a map coordinate processing device according to a second embodiment of the present application;

Fig.5 is a block diagram of an electronic device for implementing a map coordinate processing method of an embodiment of the present application.

## DETAILED DESCRIPTION

In the following description, numerous details of the embodiments of the present application, which should be deemed merely as exemplary, are set forth with reference to accompanying drawings to provide thorough understanding of the embodiments of the present application. Therefore, those skilled in the art will appreciate that various modifications and replacements may be made in the described embodiments without departing from the protection scope and the spirit of the present application. Further, for clarity and conciseness, descriptions of known functions and structures are omitted hereinafter.

First Embodiment

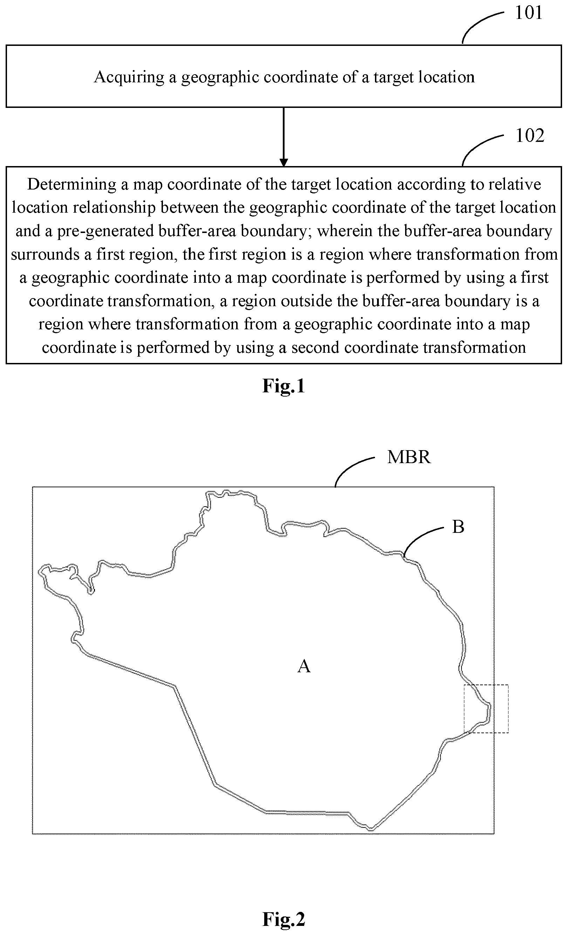

As shown in Fig.1, the present application provides a map coordinate processing method, and the method includes the following steps 101-102.

Step 101: acquiring a geographic coordinate of a target location.

Step 102: determining a map coordinate of the target location according to relative location relationship between the geographic coordinate of the target location and a pre-generated buffer-area boundary; wherein the buffer-area boundary surrounds a first region, the first region is a region where transformation from a geographic coordinate into a map coordinate is performed by using a first coordinate transformation, a region outside the buffer-area boundary is a region where transformation from a geographic coordinate into a map coordinate is performed by using a second coordinate transformation.

In the map coordinate processing method of the embodiment of the present application, an execution subject of the method may be a map coordinate processing device, or a control module for executing the map coordinate processing method in the map coordinate processing device. The map coordinate processing device may be an independent device, or a component, an integrated circuit or a chip in an electronic device. The map coordinate processing device may be a mobile electronic device or an immobile electronic device. The map coordinate processing device may be a device having an operating system, and the operating system may be an Android operating system, an iOS operating system, or other possible operating systems, which is not specifically limited in the present application.

In the embodiment of the present application, the geographic coordinate may be understood as a real coordinate, the target location may be any geographic location that needs to be configured in a map, the target location may be a certain coordinate point, and a latitude and longitude of the coordinate point are the geographic coordinate of the target location.

If the target location is to be configured in the map, the map coordinate of the target location needs to be determined. Specifically, it is necessary to transform the geographic coordinate of the target location to the map coordinate of the target location. This requires a coordinate transformation manner, corresponding to the region where the target location is located, of transformation from the geographic coordinate to the map coordinate to be considered. In the current map, the coordinate transformation manners for different regions may be different. For example, a first coordinate transformation to transform the geographic coordinate into the map coordinate is used in the first region, while the second coordinate transformation to transform the geographic coordinate into the map coordinate is used in other regions. Since different coordinate transformation manners cause different coordinate deviations, the problem of sharp changes of coordinates or overlapping of coordinates likely occurs at a boundary between the first region and other regions in the map.

In order to solve the above-mentioned problem, the embodiments of the present application provide a boundary buffer attenuation method, so that a map coordinate of a location near a boundary of the first region gradually approach a map coordinate outside the region, that is, coordinates at the boundary between regions in the map will transition smoothly, and the sharp changes of coordinates or overlapping of coordinates at a boundary of a region in the map will be avoided.

In the embodiment of the present application, a buffer-area boundary surrounding the first region may be generated in advance, an entirety of the first region is located within the buffer-area boundary, and regions outside the buffer-area boundary are other regions. After the buffer-area boundary is generated, the map coordinate of the target location is determined according to the relative location relationship between the geographic coordinate of the target location and the buffer-area boundary. Here, the relative location relationship between the geographic coordinate of the target location and the buffer-area boundary may include whether the geographic coordinate of the target location is located within the buffer-area boundary or outside the buffer-area boundary, and may further include distance relationship between the geographic coordinate of the target location and the buffer-area boundary.

It should be noted that the buffer-area boundary does not necessarily completely coincide with a boundary of the first region, or in other words, the buffer-area boundary is not necessarily the same as the boundary of the first region. In this way, a region within the buffer-area boundary does not necessarily only include the entirety of the first region, and may also include a smaller portion of other regions.

The first region mentioned above may be a country or a district.

As an example, in a current map, real coordinates (i.e., a geographic coordinates) in China need to be encrypted. Map coordinates in China need to use encrypted coordinates. Encrypting the coordinates will cause the coordinates to shift and deviate from the real coordinates. However, there is no need to encrypt real coordinates outside of China. Map coordinates outside of China use WGS84 coordinates. Therefore, coordinates of near national boundaries of China, regions of China and regions adjacent to China will overlap or change sharply. Since the national boundary of China is long and has too many shape points, it will be very time-consuming to judge whether a region is inside China or outside of China. In this example, the first region may be a region of China, the first coordinate transformation may be an encrypted transformation, and the second coordinate transformation may be non-transformed.

The term WGS84 coordinates are coordinates in the WGS-84 coordinate system (World Geodetic System-1984 Coordinate System). The WGS-84 coordinate system is an internationally adopted geocentric coordinate system. An origin of the coordinate system is a mass center of the earth. The Z-axis of a geocentric space-rectangular coordinate system thereof points to a direction of a Conventional Terrestrial Pole (CTP) as defined by the BIH (Bureau International de 1'Heure) 1984.0. The X-axis therof points to an intersection of a zero meridian plane of the BIH 1984.0 and the CTP equator, and the Y-axis thereof is perpendicular to the Z-axis and the X-axis to form a right-handed coordinate system called the 1984 world geodetic coordinate system.

In the embodiment of the present application, in a case that the coordinate transformation manner for a certain region is different from that for other regions, a buffer-area boundary surrounding the region may be generated. After a geographic coordinate of a certain location is acquired, the map coordinate of the location may be determined based on the relative location relationship between the geographic coordinate of the location and the buffer-area boundary, so that a coordinate offset caused by different coordinate transformation manners for the map coordinates near the buffer-area boundary is gradually eliminated, the problem of sharp changes of coordinates or overlapping of coordinates at boundaries of different regions in the map due to different coordinate transformation manners for different regions may be solved.

Optionally, after the buffer-area boundary is generated, the method further includes: generating an MBR according to the buffer-area boundary, wherein the MBR surrounds the buffer-area boundary, and a minimum distance between the MBR and the buffer-area boundary is a first threshold.

Determining the map coordinate of the target location according to the relative location relationship between the geographic coordinate of the target location and the pre-generated buffer-area boundary includes:

determining, in a case that the target location is located within the MBR, the map coordinate of the target location according to the relative location relationship between the geographic coordinate of the target location and the buffer-area boundary;

determining a second coordinate as the map coordinate of the target location in a case that the target location is outside the MBR, wherein the second coordinate is a coordinate acquired by performing a second coordinate transformation on the geographic coordinate of the target location.

The term MBR is defined as a Minimum Bounding Rectangle (MBR), which may also be translated as a smallest bounding rectangle, a smallest containing rectangle, or a minimum encircling rectangle. The MBR refers to a maximum range of several two-dimension shapes (such as points, straight lines, polygons) expressed in two-dimensional coordinates, which is a rectangle bounded by a maximum abscissa, a minimum abscissa, a maximum ordinate and a minimum ordinate among vertices of a given two-dimension shape. Such a rectangle includes a given two-dimension shape, and sides of the rectangle are parallel to coordinate axes. The MBR may also be understood as a two-dimension form of a minimum bounding box.

In the embodiment of the present application, the MBR may be generated based on the buffer-area boundary. In order to facilitate understanding, such terms as a buffer area and a buffer-area width are introduced below. A value of the buffer-area width is a first threshold. The buffer-area boundary may be understood as an inner boundary of the buffer area, extending a distance of the width of the first threshold from the buffer-area boundary may form an outer boundary of the buffer area, and an area between the inner boundary of the buffer area and the outer boundary of the buffer area is the buffer area. The MBR may be understood as a minimum bounding rectangle of the outside boundary of the buffer area. The MBR surrounds the outside boundary of the buffer area, surrounds the buffer area, surrounds the buffer-area boundary, and the minimum distance between the buffer-area boundary and the MBR is the first threshold.

In the embodiment of the present application, a suitable buffer-area width may be selected, that is, a suitable first threshold may be determined. In this way, a region to be calculated may be effectively reduced, and a length deformation and an area deformation of geometric objects within the buffer area may be guaranteed to be within a controllable range. The width of the buffer area may be, for example, 20 kilometers, 40 kilometers, and so on.

The buffer area may be understood as a boundary area between the first region and other regions, and the boundary buffer attenuation method provided in the embodiments of the present application may be used to determine map coordinates of the target location in the buffer area.

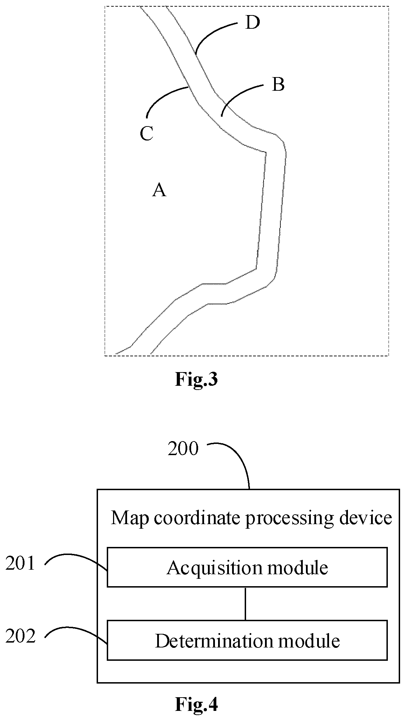

As shown in Fig.2 to Fig.3, Fig.2 shows a schematic diagram of a buffer area B of a region A (i.e. the first region) and an MBR surrounding the buffer area B. A rectangular box surrounding the buffer area B in Fig.2 is an MBR of the region A. Fig.3 shows an enlarged schematic diagram of the buffer area in the dashed box in Fig.2. C and D in Fig.3 represent a buffer-area boundary and the outside boundary of the buffer area, respectively.

After the MBR is generated, it is firstly determined whether the geographic coordinate of the target location is located within the MBR. If the geographic coordinate of the target location is outside the MBR, then the target location definitely does not belong to the first region and is outside of the buffer area, the map coordinate of the target location may be determined directly according to the second coordinate transformation manner, without needing to determine the map coordinate of the target location based on the relative location relationship between the geographic coordinate of the target location and the buffer-area boundary. Only in a case that the geographic coordinate of the target location is located within the MBR, the map coordinate of the target location is further determined according to the relative location relationship between the geographic coordinate of the target location and the buffer-area boundary.

In this way, in the embodiment, by generating the MBR, map coordinates of most locations outside the MBR may be directly determined, and only map coordinates of a small part of locations located within the MBR need to be determined based on the relative location relationship between the geographic coordinate of the target location and the buffer-area boundary, which may improve efficiency of determining the map coordinates.

Optionally, determining the map coordinate of the target location according to the relative location relationship between the geographic coordinate of the target location and the pre-generated buffer-area boundary includes:

> determining a first coordinate as the map coordinate of the target location in a case that the geographic coordinate of the target location is located within the buffer-area boundary, wherein the first coordinate is a coordinate acquired by performing a first coordinate transformation on the geographic coordinate of the target location;
> determining a second coordinate as the map coordinate of the target location in a case that the geographic coordinate of the target location is outside the buffer-area boundary and a minimum distance between the geographic coordinate of the target location and the buffer-area boundary is greater than or equal to a first threshold, wherein the second coordinate is a coordinate acquired by performing a second coordinate transformation on the geographic coordinate of the target location;
determining the map coordinate of the target location according to the first coordinate, the second coordinate and a buffer factor, in a case that the geographic coordinate of the target location is outside the buffer-area boundary and the minimum distance between the geographic coordinate of the target location and the buffer-area boundary is less than the first threshold, wherein the buffer factor is determined by the minimum distance between the geographic coordinate of the target location and the buffer-area boundary as well as by the first threshold.

In the embodiment, for a case that a target location is located within the buffer-area boundary, it may be understood that the target location is located in the first region, and the map coordinate may be determined directly according to the first coordinate transformation manner; for a case that the target location is outside the buffer-area boundary and the minimum distance between the geographic coordinate and the buffer-area boundary is greater than or equal to the first threshold, it may be understood that the target location is outside the buffer area, and the map coordinate may be determined directly according to the second coordinate transformation manner; for a case that the target location outside the buffer-area boundary and the minimum distance between the geographic coordinate and the buffer-area boundary is less than the first threshold, it may be understood that the target location is located within the buffer area, the boundary buffer attenuation method may be used to determine the map coordinate of the target location located within the buffer area.

The boundary buffer attenuation method may be realized by introducing a buffer factor. For ease of understanding, the buffer factor may be marked as R, and the buffer factor may also be called a buffer attenuation factor. The buffer factor may be determined by the minimum distance between the geographic coordinate of the target location and the buffer-area boundary and by the first threshold. The first threshold corresponds to the width of the buffer area, and the buffer factor may well reflect the relative location relationship between the geographic coordinate of the target location and the buffer-area boundary.

In the embodiment, the minimum distance between the geographic coordinate of the target location and the buffer-area boundary may be determined in the following manner: first determining a line segment, closest to the target location, on the buffer-area boundary, then drawing a vertical line from the target location to the line segment, wherein a length of the vertical line is a minimum distance between the geographic coordinate of the target location and the buffer-area boundary.

In the embodiment, after the buffer factor is introduced, the map coordinate of the target location may be determined according to the first coordinate, the second coordinate and the buffer factor. Due to introduction of the buffer factor, the difference between the first coordinate transformation and the second coordinate transformation in the buffer area may be gradually reduced, so that the map coordinate located in the buffer area gradually approach the map coordinate outside the buffer area, and the coordinates within the buffer area transition smoothly, thereby avoiding sharp changes of coordinates or overlapping of coordinates at a boundary of a region in the map.

Optionally, determining the map coordinate of the target location according to the first coordinate, the second coordinate and the buffer factor includes: calculating the map coordinate of the target location according to the following formula:

$$P=P2+(P1-P2)*R$$

wherein, PI is the first coordinate, P2 is the second coordinate, R is the buffer factor, R=1-d/D, and d is the minimum distance between the geographic coordinate of the target location and the buffer-area boundary, and D is the first threshold.

The embodiment provides a formula for calculating the map coordinate of the target location, in which the buffer factor R has a value ranging from 0 to 1. The closer to the buffer-area boundary the target location is, the closer to 1 R is, and the map coordinate of the target location is closer to the first coordinate; the farther from the buffer-area boundary the target location is, the closer R to 0 is, and the map coordinate of the target location is closer to the second coordinate. When the target location is on the buffer-area boundary, R is equal to 1, and the map coordinate of the target location is the first coordinate; when the target location is on the outside boundary of the buffer area, R is equal to 0, and the map coordinate of the target location is the second coordinate.

In the embodiment, the difference between the first coordinate transformation and the second coordinate transformation may be gradually reduced by the above formula.

In addition to the above formula, other formulas may also be used. When the formulas are different, meaning of the buffer factor may also be different. For example, the buffer factor may be d/D, then P may be P1+(P2-P1)*R, and the buffer factor may also be a root or a square of d/D.

Optionally, the buffer-area boundary is a polygon surrounding a boundary line of the first region, and the number of shape points of the buffer-area boundary is less than or equal to a second threshold.

The number of shape points of the buffer-area boundary is less than or equal to the second threshold, it may be understood that, the number of shape points of the buffer-area boundary should be as small as possible, the number of sides of the polygon of the buffer-area boundary should be as small as possible, and the number of line segments of the buffer-area boundary should be as small as possible.

Since the relative location relationship between the geographic coordinate of the target location and the buffer-area boundary needs to be considered, and further, since the minimum distance between the geographic coordinate of the target location and the buffer-area boundary needs to be considered, when the number of shape points of the buffer-area boundary is small, the relative location relationship between the geographic coordinate of the target location and the buffer-area boundary may be determined more simply, and the minimum distance between the geographic coordinate of the target location and the buffer-area boundary may be determined more simply.

It should be appreciated that, multiple optional embodiments in the map coordinate processing method of the present application may be implemented in combination with each other or implemented separately, which is not limited in the present application.

The foregoing embodiments of the present application have at least the following advantages or beneficial effects.

According to the present application, in a case that the coordinate transformation manner for a certain region is different from that for other regions, a buffer-area boundary surrounding the region may be generated. After a geographic coordinate of a certain location is acquired, the map coordinate of the location may be determined based on the relative location relationship between the geographic coordinate of the location and the buffer-area boundary, so that a coordinate offset caused by different coordinate transformation manners for map coordinates near the buffer-area boundary is gradually eliminated, the problem of sharp changes of coordinates or overlapping of coordinates at a boundary between different regions in the map due to different coordinate transformation manners for different regions may be solved.

Second Embodiment

As shown in Fig.4, the present application provides a map coordinate processing device, and the device includes:

an acquisition module 201, configured to acquire a geographic coordinate of a target location;
a determination module 202, configured to determine a map coordinate of the target location according to relative location relationship between the geographic coordinate of the target location and a pre-generated buffer-area boundary; wherein the buffer-area boundary surrounds a first region, the first region is a region where transformation from a geographic coordinate into a map coordinate is performed by using a first coordinate transformation, a region outside the buffer-area boundary is a region where transformation from a geographic coordinate into a map coordinate is performed by using a second coordinate transformation.

Optionally, the map coordinate processing device 200 further includes:
a generation module, configured to generate a Minimum Bounding Rectangle (MBR) according to the buffer-area boundary, wherein the MBR surrounds the buffer-area boundary, and a minimum distance between the MBR and the buffer-area boundary is a first threshold.

The determination module 202 is specifically configured to:

determine, in a case that the target location is located within the MBR, the map coordinate of the target location according to the relative location relationship between the geographic coordinate of the target location and the buffer-area boundary;
determine a second coordinate as the map coordinate of the target location in a case that the target location is outside the MBR, wherein the second coordinate is a coordinate acquired by performing the second coordinate transformation on the geographic coordinate of the target location.

Optionally, the determination module 202 includes:

a first determination submodule, configured to determine a first coordinate as the map coordinate of the target location in a case that the geographic coordinate of the target location is located within the buffer-area boundary, wherein the first coordinate is a coordinate acquired by performing the first coordinate transformation on the geographic coordinate of the target location;
a second determination submodule, configured to determine a second coordinate as the map coordinate of the target location in a case that the geographic coordinate of the target location is outside the buffer-area boundary and a minimum distance between the geographic coordinate of the target location and the buffer-area boundary is greater than or equal to a first threshold, wherein the second coordinate is a coordinate acquired by performing the second coordinate transformation on the geographic coordinate of the target location;
a third determination submodule, configured to determine the map coordinate of the target location according to the first coordinate, the second coordinate and a buffer factor, in a case that the geographic coordinate of the target location is outside the buffer-area boundary and the minimum distance between the geographic coordinate of the target location and the buffer-area boundary is less than the first threshold, wherein the buffer factor is determined by the minimum distance between the geographic coordinate of the target location and the buffer-area boundary and by the first threshold.

Optionally, the third determination submodule is specifically configured to:
calculate the map coordinate of the target location according to the following formula:

$$P=P2+(P1-P2)*R$$

wherein, PI is the first coordinate, P2 is the second coordinate, R is the buffer factor, R=1-d/D, and d is the minimum distance between the geographic coordinate of the target location and the buffer-area boundary, and D is the first threshold.

Optionally, the buffer-area boundary is a polygon surrounding a boundary line of the first region, and the number of shape points of the buffer-area boundary is less than or equal to a second threshold.

The map coordinate processing device 200 according to the present application is capable of implementing various processes in the embodiment of the map coordinate processing method, and achieve the same beneficial effects. To avoid repetition, details are not described herein again.

According to embodiments of the present application, an electronic device and a readable storage medium are further provided.

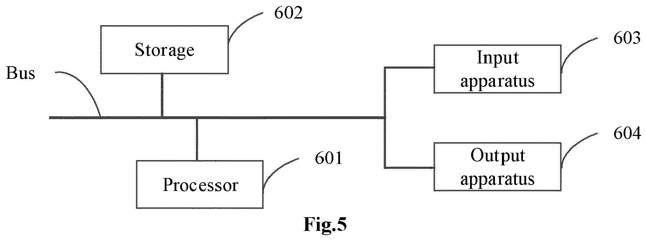

As shown in Fig.5, a block diagram of an electronic device of a map coordinate processing method according to embodiments of the present application is illustrated. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present application described and/or claimed herein.

As shown in Fig.5, the electronic device includes: one or more processors 601, a storage 602, and interfaces for connecting various components, including a high-speed interface and a low-speed interface. The various components are interconnected using different buses and may be mounted on a common motherboard or mounted in another manner as desired. The processors may process instructions configured to be executed in the electronic device, and the instructions include instructions stored in the storage or on the storage and configured to display graphical information of GUI on an external input/output device (such as a display device coupled to the interface). In other embodiments, multiple processors and/or multiple buses may be used with multiple memories, if necessary. Also, multiple electronic devices may be connected, and each electronic device provides some of the necessary operations (e.g., in a server array, a group of blade servers, or a multi-processor system). Fig.5 illustrates a single processor 601 as an example.

The storage 602 is a non-transitory computer-readable storage medium provided herein. The storage stores therein instructions executable by at least one processor to cause the at least one processor to implement the map coordinate processing method according to the present application. The non-transitory computer-readable storage medium of the present application stores therein computer instructions for causing a computer to implement the map coordinate processing method according to the present application.

The storage 602, as a non-transitory computer-readable storage medium, may be used to store non-transitory software programs, non-transitory computer-executable programs, and modules, such as program instructions/modules (e.g., the acquisition module 201 and the determination module 202 shown in Fig.4) corresponding to the map coordinate processing method in the embodiments of the present the present. By executing the non-transitory software programs, instructions and modules stored in the storage 602, the processor 601 performs various functional applications and data processing of the map coordinate processing device, i.e., implements the map coordinate processing method in the method embodiment described above.

The storage 602 may include a program storage region and a data storage region, where the program storage region may store an operating system, and an application program required by at least one function; and the data storage region may store data created according to usage of the electronic device for implementing the map coordinate processing method. In addition, the storage 602 may include a high speed random access memory, and may also include a non-transitory storage, such as at least one magnetic disk storage device, flash memory device, or other non-transitory solid state storage device. In some embodiments, the storage 602 may optionally include a storage remotely located with respect to the processor 601. The remote storage may be connected via a network to the electronic device for implementing the map coordinate processing method. Examples of the network mentioned above include, but are not limited to, an Internet, an intranet, a local area network, a mobile communication network, and a combination thereof.

The electronic device for implementing the map coordinate processing method may further include: an input apparatus 603 and an output apparatus 604. The processor 601, the storage 602, the input apparatus 603, and the output apparatus 604 may be connected to each other via a bus or in other ways. In Fig.5, a connection by a bus is taken as an example.

The inputted apparatus 603 may receive inputted numeric or character information and generate key signal inputs related to user settings and functional controls of the electronic device for implementing the map coordinate processing method. For example, the input apparatus may include a touch screen, a keypad, a mouse, a trackpad, a touch pad, a pointing stick, one or more mouse buttons, a trackball, a joystick, etc. The output apparatus 604 may include a display device, an auxiliary lighting device (e.g., LED), a tactile feedback device (e.g., a vibration motor), etc. The display device may include, but is not limited to, a liquid crystal display (LCD), a light-emitting diode (LED) display, and a plasma display. In some embodiments, the display device may be a touch screen.

Various embodiments of systems and techniques described herein can be implemented in a digital electronic circuit system, an integrated circuit systems, a dedicated ASIC (application specific integrated circuits), computer hardware, firmware, software, and/or combinations thereof. These various embodiments may include implementation in one or more computer programs that may be executed and/or interpreted by a programmable system including at least one programmable processor. The programmable processor may be a dedicated or general purpose programmable processor, and may receive data and instructions from a storage system, at least one input apparatus and at least one output apparatus, and transmit the data and the instructions to the storage system, the at least one input apparatus and the at least one output apparatus.

These computing programs (also referred to as programs, software, software applications, or codes) include machine instructions of a programmable processor, and may be implemented using advanced procedure-oriented and/or object-oriented programming languages, and/or assembly/machine languages. As used herein, the terms "machine-readable medium" and "computer-readable medium" refer to any computer program product, apparatus, and/or device (e.g., a magnetic disk, an optical disc, a storage, a programmable logic device (PLD)) for providing machine instructions and/or data to a programmable processor, and include a machine-readable medium that receives machine instructions implemented as machine-readable signals. The term "machine-readable signal" refers to any signal used to provide machine instructions and/or data to a programmable processor.

To facilitate user interaction, the system and the technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any form of sensory feedback (e.g., a visual feedback, an auditory feedback, or a tactile feedback); and input from the user may be received by any means (including a sound input, a voice input, or a tactile input).

The system and the technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique described herein), or any combination of such back-end, middleware, or front-end components. The components of the system can be interconnected by any form or any medium of digital data communication (e.g., a communication network). Examples of communication networks include a local area network (LAN), a wide area network (WAN), the Internet and a Blockchain Network.

The computer system can include a client and a server. The client and the server are generally remote from each other and typically interact with each other through a communication network. The relationship between the client and the server is generated by virtue of computer programs running on respective computers and having a client-server relationship with each other.

According to the technical solutions of the embodiments of the present application, in a case that a coordinate transformation manner of a certain region is different from that other regions, a buffer-area boundary surrounding the region may be generated. After a geographic coordinate of a certain location is acquired, the map coordinate of the location may be determined based on the relative location relationship between the geographic coordinate of the location and the buffer-area boundary, so that a coordinate offset caused by different coordinate transformation manners for the map coordinates near the buffer-area boundary is gradually eliminated, the problem of sharp changes of coordinates or overlapping of coordinates at boundaries among different regions in the map due to different coordinate transformation manners used for different regions may be solved.

It is appreciated, all forms of processes shown above may be used, and steps thereof may be reordered, added or deleted. For example, as long as expected results of the technical solutions of the present application can be achieved, steps set forth in the present application may be performed in parallel, performed sequentially, or performed in a different order, and there is no limitation in this regard herein.

The foregoing specific implementations constitute no limitation on the protection scope of the present application. It is appreciated by those skilled in the art, various modifications, combinations, sub-combinations and replacements may be made according to design requirements and other factors. Any modifications, equivalent replacements and improvements made without departing from the spirit and the principle of the present application shall be deemed as falling within the protection scope of the present application.

**Claims**

1. A map coordinate processing method, **characterized in that**, the method comprises:

    acquiring a geographic coordinate of a target location;
    determining a map coordinate of the target location according to relative location relationship between the geographic coordinate of the target location and a pre-generated buffer-area boundary; wherein the buffer-area boundary surrounds a first region, the first region is a region where transformation from the geographic coordinate into the map coordinate is performed by using a first coordinate transformation, a region outside the buffer-area boundary is a region where transformation from the geographic coordinate into the map coordinate is performed by using a second coordinate transformation.

2. The method according to claim 1, **characterized in that**, after the buffer-area boundary is generated, the method further comprises:
determining a Minimum Bounding Rectangle (MBR) according to the buffer-area boundary, wherein the MBR surrounds the buffer-area boundary, and a minimum distance between the MBR and the buffer-area boundary is a first threshold;
determining the map coordinate of the target location according to the relative location relationship between the geographic coordinate of the target location and the pre-generated buffer-area boundary comprises:

    determining the map coordinate of the target location according to the relative location relationship between the geographic coordinate of the target location and the buffer-area boundary in a case that the target location is located within the MBR;
    determining a second coordinate as the map coordinate of the target location in a case that the target location is outside the MBR, wherein the second coordinate is a coordinate acquired by performing the second coordinate transformation on the geographic coordinate of the target location.

3. The method according to claim 1 or 2, **characterized in that**, determining the map coordinate of the target location according to the relative location relationship between the geographic coordinate of the target location and the pre-generated buffer-area boundary comprises:

    determining a first coordinate as the map coordinate of the target location in a case that the geographic coordinate of the target location is located within the buffer-area boundary, wherein the first coordinate is a coordinate acquired by performing the first coordinate transformation on the geographic coordinate of the target location;

    determining a second coordinate as the map coordinate of the target location in a case that the geographic coordinate of the target location is outside the buffer-area boundary and a minimum distance between the geographic coordinate of the target location and the buffer-area boundary is greater than or equal to a first threshold, wherein the second coordinate is a coordinate acquired by performing the second coordinate transformation on the geographic coordinate of the target location;

    determining the map coordinate of the target location according to the first coordinate, the second coordinate and a buffer factor, in a case that the geographic coordinate of the target location is outside the buffer-area boundary and the minimum distance between the geographic coordinate of the target location and the buffer-area boundary is less than the first threshold, wherein the buffer factor is determined by the minimum distance between the geographic coordinate of the target location and the buffer-area boundary and by the first threshold.

4. The method according to claim 3, **characterized in that**, determining the map coordinate of the target location according to the first coordinate, the second coordinate and the buffer factor comprises:
    calculating the map coordinate of the target location according to a following formula:

$$P=P2+(P1-P2)*R$$

    wherein, PI is the first coordinate, P2 is the second coordinate, R is the buffer factor, R=1-d/D, and d is the minimum distance between the geographic coordinate of the target location and the buffer-area boundary, and D is the first threshold.

5. The method according to claim 1, **characterized in that**, the buffer-area boundary is a polygon surrounding a boundary of the first region, and the number of shape points of the buffer-area boundary is less than or equal to a second threshold.

6. A map coordinate processing device, **characterized in that**, the device comprises:

    an acquisition module, configured to acquire a geographic coordinate of a target location;
    a determination module, configured to determine a map coordinate of the target location according to relative location relationship between the geographic coordinate of the target location and a pre-generated buffer-area boundary; wherein the buffer-area boundary surrounds a first region, the first region is a region where transformation from the geographic coordinate into the map coordinate is performed by using a first coordinate transformation, a region outside the buffer-area boundary is a region where transformation from the geographic coordinate into the map coordinate is performed by using a second coordinate transformation.

7. The device according to claim 6, **characterized in that**, the device further comprises:

    a generation module, configured to generate a Minimum Bounding Rectangle (MBR) according to the buffer-area boundary, wherein the MBR surrounds the buffer-area boundary, and a minimum distance between the MBR and the buffer-area boundary is a first threshold;
    the determination module is specifically configured to:

        determine the map coordinate of the target location according to the relative location relationship between the geographic coordinate of the target location and the buffer-area boundary, in a case that the target location is located within the MBR;
        determine a second coordinate as the map coordinate of the target location in a case that the target location is outside the MBR, wherein the second coordinate is a coordinate acquired by performing the second coordinate transformation on the geographic coordinate of the target location.

8. The device according to claim 6 or 7, **characterized in that**, the determination module comprises:

    a first determination submodule, configured to determine a first coordinate as the map coordinate of the target location in a case that the geographic coordinate of the target location is located within the buffer-area boundary, wherein the first coordinate is a coordinate acquired by performing the first coordinate transformation on the geographic coordinate of the target location; a second determination submodule, configured to determine a second coordinate as the map coordinate of the target location in a case that the geographic coordinate of the target location is outside the buffer-area boundary, and a minimum distance between the geographic coordinate of the target location and the buffer-area boundary is greater than or equal to a first threshold, wherein the second coordinate is a coordinate acquired by performing the second coordinate transformation on the geographic coordinate of the target location; a third determination submodule, configured to determine the map coordinate of the target location according to the first coordinate, the second coordinate and a buffer factor, in a case that the geographic coordinate of the target location is outside the buffer-area boundary and the minimum distance between the geographic coordinate of the target location and the buffer-area boundary is less than the first threshold, wherein the buffer factor is determined by the minimum distance between the geographic coordinate of the target location and the buffer-area boundary and by the first threshold.

9. The device according to claim 8, **characterized in that**, the third determination submodule is specifically configured to:
calculate the map coordinate of the target location according to a following formula:

$$P=P2+(P1-P2)*R$$

wherein, P1 is the first coordinate, P2 is the second coordinate, R is the buffer factor, R=1-d/D, and d is the minimum distance between the geographic coordinate of the target location and the buffer-area boundary, and D is the first threshold.

10. The device according to claim 6, **characterized in that**, the buffer-area boundary is a polygon surrounding a boundary of the first region, and the number of shape points of the buffer-area boundary is less than or equal to a second threshold.

11. An electronic device, comprising:

at least one processor; and
a storage communicatively connected to the at least one processor,
wherein the storage stores an instruction configured to be executable by the at least one processor, and the at least one processor is configured to execute the instruction to implement the method according to any one of claims 1 to 5.

12. A non-transitory computer readable storage medium, storing therein a computer instruction, wherein the computer instruction is configured to be executed by a computer, to implement the method according to any one of claims 1 to 5.

101

| Acquiring a geographic coordinate of a target location |

102

| Determining a map coordinate of the target location according to relative location relationship between the geographic coordinate of the target location and a pre-generated buffer-area boundary; wherein the buffer-area boundary surrounds a first region, the first region is a region where transformation from a geographic coordinate into a map coordinate is performed by using a first coordinate transformation, a region outside the buffer-area boundary is a region where transformation from a geographic coordinate into a map coordinate is performed by using a second coordinate transformation |

**Fig.1**

MBR

B

A

**Fig.2**

**Fig.3**

200

Map coordinate processing device

201    Acquisition module

202    Determination module

**Fig.4**

Bus

602

Storage

603

Input
apparatus

601

Processor

604

Output
apparatus

**Fig.5**